# EUROPEAN PATENT SPECIFICATION

(11) **EP 1 442 819 B1**
(45) Date of publication and mention of the grant of the patent: **15.12.2010**
(21) Application number: 04001705.5
(22) Date of filing: 27.01.2004
(51) Int. Cl.: B23K 11/31, B23K 37/02

(54) **Resistance welding machine for sheets**
Widerstandsschweissmaschine für Bleche
Machine de soudage par résistance pour des tôles

(30) Priority: 28.01.2003 IT to20030047
(43) Date of publication of application: 04.08.2004
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- FR-A- 1 476 016
- GB-A- 1 225 016
- US-A- 5 063 278
- PATENT ABSTRACTS OF JAPAN vol. 007, no. 207 (M-242), 13 September 1983 (1983-09-13) & JP 58 103977 A (NISSAN JIDOSHA KK), 21 June 1983 (1983-06-21)

## Description

The present invention relates to a resistance welding machine for sheets, according to the preamble of claim 1.

A welding machine of this kind is known from FR-A-1 476 016.

The welding machine according to the invention has been developed in its application to projection welding in which one of the workpieces of sheet to be welded has one or more reliefs or indentations for concentrating the welding current, but it can be applied to resistance welding in general.

Resistance welding machines for sheets are already known, in which between each welding operation and the following, the movable element carrying the welding electrode can be brought to a raised and withdrawn position, in which the electrode is not superimposed to the workpieces to be welded, so that the above space is left free in order to allow these workpieces to be put down on the platform from up to down and to allow to remove the welded workpieces from down to up.

In a kind of machine, the movable element is mounted on a horizontal slide: a first actuator with vertical movement works in order to rise and to go down the slide while the electrode is superimposed to the platform; a second actuator with horizontal movement works to move the slide, when the element is in the raised position, for withdrawing it to a position in which it leaves the space above the platform free.

This known machine, owing to the presence of the slide and its actuator, has the drawback of having a relatively large horizontal dimension, which would be desirable to reduce.

In an other kind of machine, for example known from JP-A-58 103 977, the movable element is simply brought to oscillate about a fixed horizontal axis, under the command of an actuator, in order to move it along an arc of circle between the lowered working position and the raised and withdrawn position.

This other known machine has the advantage to have a reduced horizontal dimension, thanks to the absence of the horizontal actuator, but it has the drawback that the electrode reaches the workpieces to be welded with a movement which is arched rather than perfectly rectilinear and perpendicular to the workpieces.

This constitutes a drawback especially in the case of the projection welding. In this type of welding, in fact, between the superimposed workpieces of sheet to be welded a space initially exists, since they are kept at a distance from the reliefs or indentations, and the electrode, when it reaches the contact with the workpieces, performs a down over-travel during which, because of the welding pressure and current, it flattens these reliefs and nullifies the aforesaid space. Since this over-travel occurs on an arched path, it has a lateral component which often causes a sliding of the upper worpiece of sheet with respect to the lower one, to disadvantage of the precision of the mutual positioning of the welded workpieces.

US-A-4 728 767 shows a resistance welding machine provided with a movable electrode having a linear and curved movement.

The object of the invention is to make a welding machine of the type considered, which does not have the above mentioned drawbacks of the known machines and which has a simple and not expensive structure.

According to the invention, this object is reached by means of a resistance welding machine for sheets as claimed.

In the welding machine according to the invention, the movements of the movable element carrying the welding electrode are controlled, through a simple kinematic cam structure, starting from a single linear actuator, to the advantage of the reduction of the dimensions of the machine. Moreover, the use of a single linear actuator represents an economic advantage.

Since the electrode is directed down and goes down orthogonally on the workpieces which are welded, while the tracer unit is engaged with the vertical portion of the guide, undesired slidings of the upper workpiece of sheet with respect to the lower one cannot take place, which constituted the drawback of the welding machines provided with a movable element with arched movement.

The invention will be better clarified from the reading of the following detailed description, given as a non-limitative example, of a resistance welding machine for sheets according to a preferred embodiment of the invention, which is illustrated in the appended drawings which are provided as a non-limitative example and in which:
- figure 1 an overall perspective view of the machine,
- figure 2 is a partially broken side elevational view of the portion of the machine indicated in general A in figure 1, in which a movable element carrying a welding electrode is in a raised and withdrawn position,
- figure 3 is a view similar to that of figure 2, with the movable element in an intermediate position,
- figure 4 is a view similar to those of figures 2 and 3, with the movable element in a lowered working position, and
- figure 5 is a detail sectional view, taken in a greater scale in the plane indicated V-V in figure 3.

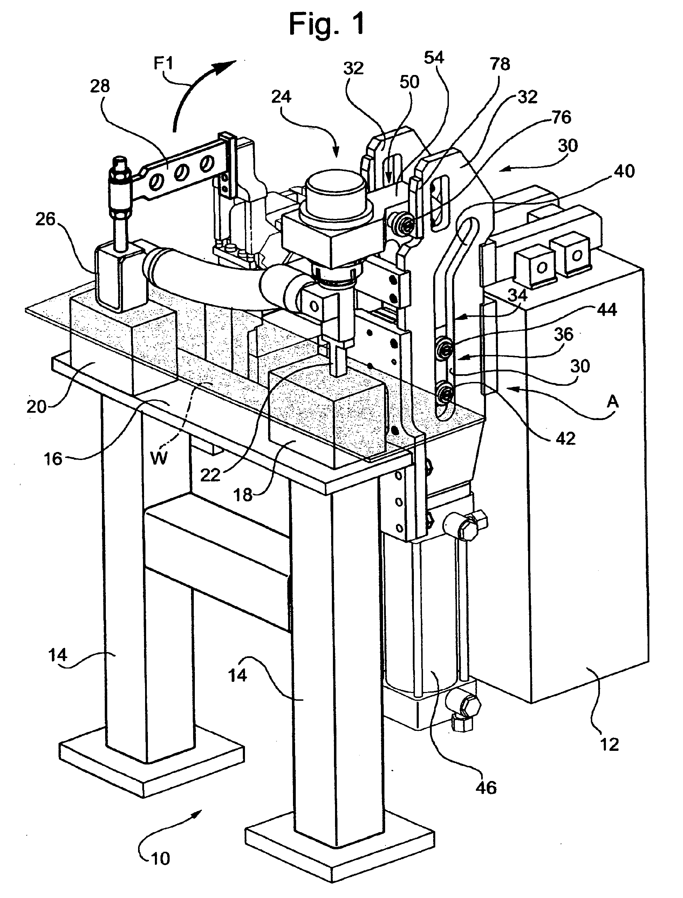

Referring to figure 1, the welding machine represented comprises a frame designated in the whole by 10, which will be considered in the following.

A transformer 12 for feeding the welding current is arranged close to the frame 10, whose elements have not been represented since they are known per se.

The frame 10 comprises, among other things, a pair of uprights 14 which carry a horizontal metallic table 16.

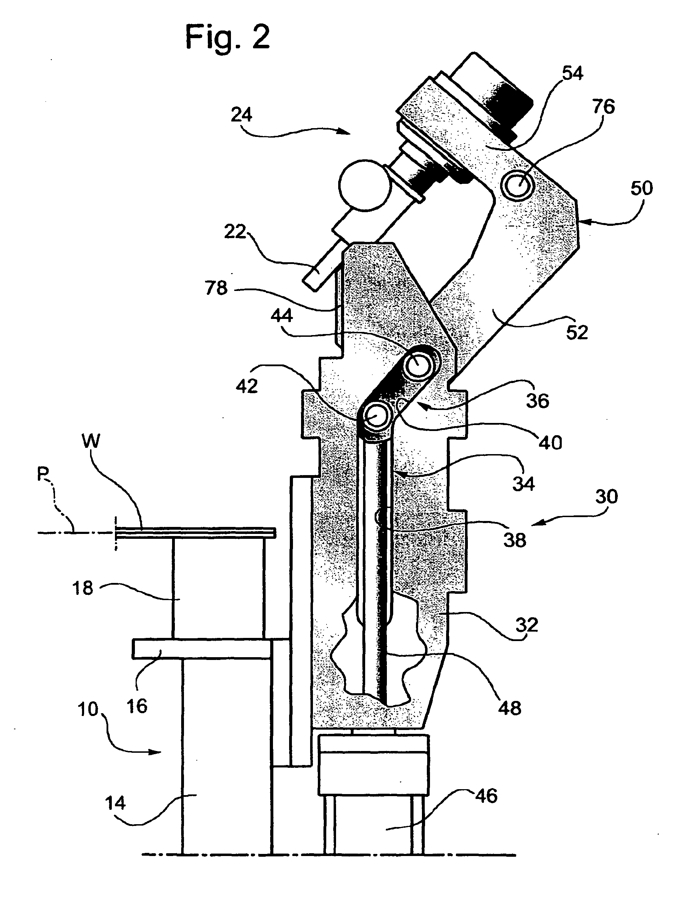

The table 16 supports in turn a pair of insulating blocks 18, 20 which constitute support platforms of the superimposed workpieces of sheet to be welded, indicated by broken lines by W in figure 1 and still indicated by W in figures 2 to 4.

In figures 2 to 4, the outline of a welding plane of the workpieces W is indicated P.

A welding electrode is indicated 22, which is carried by a movable element, designated in the whole by 24, which will be referred to in the following.

A pressure electrode for closing the electrical welding circuit is indicated 26, which, through the workpieces W, cooperates with the platform 20.

In a known manner, the pressure electrode 26 is carried by an oscillating arm 28, which can be raised, according arrow F1, to a raised and withdrawn position in order to leave the space above the platform 20 free and therefore to make easier to put down and remove the workpieces W.

Both the welding and pressure electrodes 22 and 26 are electrically connected to the secondary of the transformer 12.

Referring now to figures 2 to 4, as well as to figure 1, the frame 10 supports a columnar structure, designated in the whole by 30.

The columnar structure 30 preferably comprises, as represented, a pair of opposite body sides 32 between which the movable element 24 is arranged.

Respective homologous slits 34 are formed in the body sides 32, which jointly constitute a guide acting as a fixed cam, for a tracer unit, designated in the whole by 36.

The tracer unit 36 is fastened to the movable element 24 and slidably engages the edges of the slits 34 which constitute the guide.

Each slit 34 comprises a lower linear portion 34 and an upper tilted or deflected portion 40.

The tracer unit 36 preferably comprises, for each slit 34, a pair of superimposed tracer rollers, lower 42 and upper 44, having a horizontal axis.

The movable element 24 is articulated about the axis of the lower rollers 42.

The cylinder of a linear to-and-fro, hydraulic, pneumatic or electrical actuator 46 is fixed to the transformer 12 and/or to the body sides 32, which has a vertical rod 48 which is articulated about the horizontal axis of the lower rollers 42 of the tracer unit 36.

As it will be better understood in the following, the single actuator 46 constitutes both the control means of the movements of the movable element and the pressure means for pressing the electrode on the workpieces W to be welded.

The travel of the actuator rod 48 has a length such that, when the lower roller 42 of each pair of rollers 42, 44 is located at the top of the lower linear portion 40 of the respective slit 34 and the upper roller 44 of each pair is located at the upper deflected portion 40 of the respective slit 34, the movable element 24 and its welding electrode 22 is located in a raised and tilted or deflected position, illustrated in figure 2, in which the electrode 22 is not superimposed to the workpieces W of sheet and does not interfere with the put down and the removal of them from up.

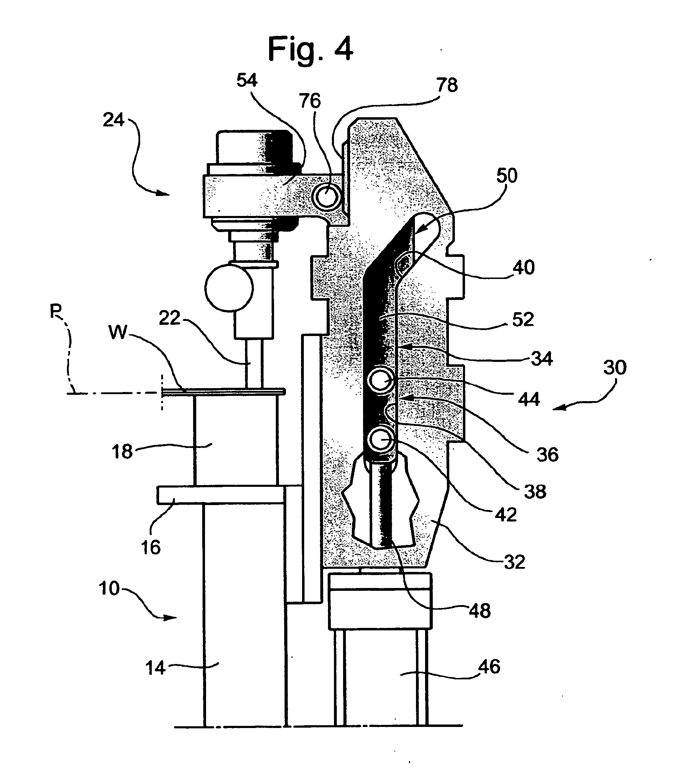

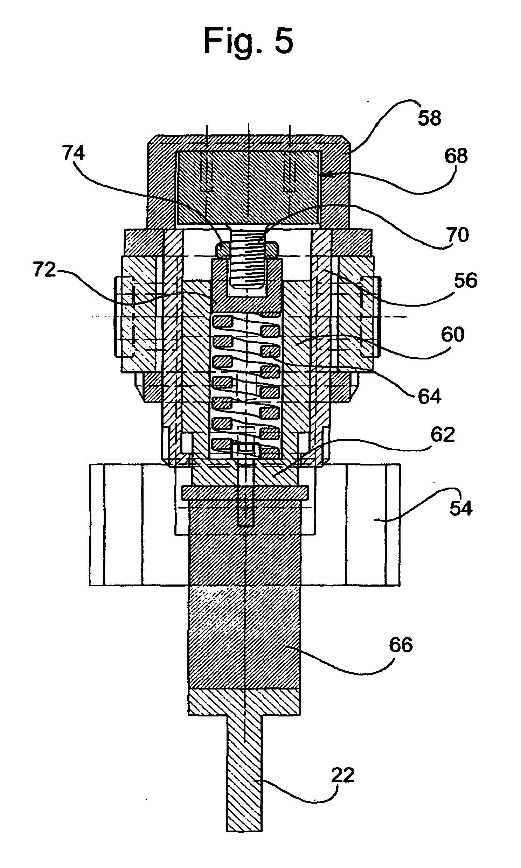

The arrangement is such that when both the lower rollers 42 and the upper rollers 44 of the tracer unit 36 engage the lower linear portion 38 of the guide 34, such as in figures 4 and 5, the electrode 22 is superimposed to the platform 18 and is directed orthogonally towards the welding plane P.

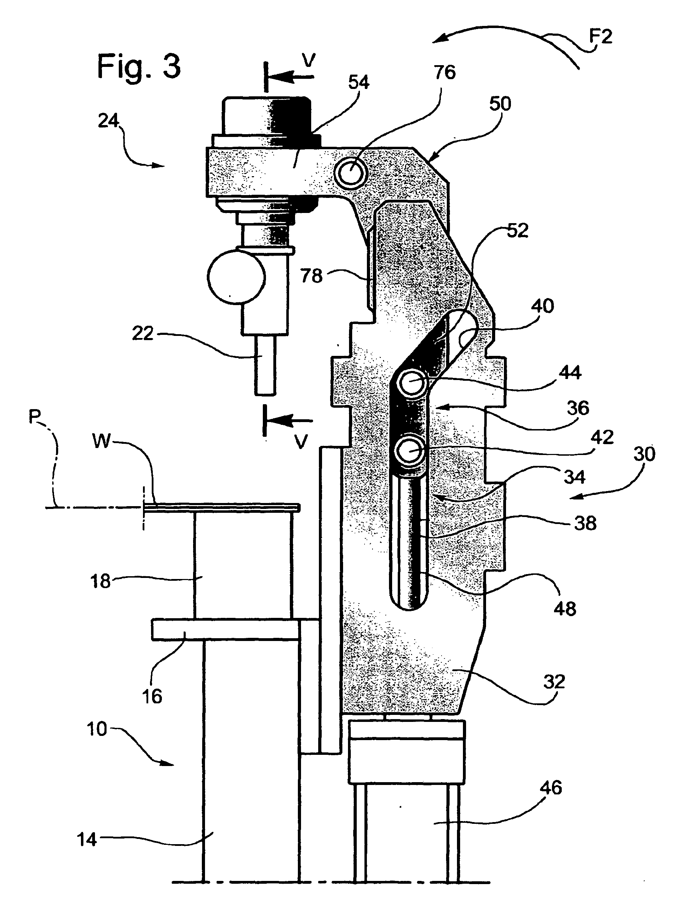

In these conditions, a down return movement of the rod 48 of the actuator 46 bring the movable element 24 down from the intermediate withdrawn and raised position of figure 3 to the lowered working position of figure 4 in which the electrode 22 is applied perpendicularly on the upper workpiece of the workpieces W of sheet to be welded.

The working cycle for executing a welding will be better described in the following.

Preferably, as represented, the movable element 24 comprises a Γ-shaped body 50 with an upright 52 arranged between the body sides 32, and which carries the tracer unit constituted by the rollers 42, 44, and with an upper bracket 54 supporting the electrode 22.

Advantageously, yielding damping elastic means for applying the pressure of the electrode 22 to the worpieces of sheet W are interposed between the upper bracket 54 of the movable element 24 and the electrode 22, in the condition that will be described with reference to figure 4.

Preferably, as illustrated in figure 5, the upper bracket 54 carries a hollow body 56 fastened to it, acting as a cylinder, which is closed at the top by a head 58.

A cup-shaped 60 is mounted in the hollow body 56, which acts as a piston and has a bottom wall 62 to which the electrode 22 is fixed.

The aforesaid dampeing elastic means are constituted by a compression coil spring 64 which is contained in the cup-shaped body 60 and which counteracts on the one side against the bottom wall 62 and on the other side against the head 58. An electrode-holder 66 is fixed at the bottom to the bottom wall 62, to which the electrode 22 is fixed.

Preferably, a load cell 68 is interposed between the spring 64 and head 58, which acts as a pressure transducer in order to generate an electrical authorisation signal for the welding when, in the condition of figure 4, the welding pressure reaches a preset value.

The load cell 68 is provided with a threaded tang 70 which is engaged in a threaded spacer bush 72.

A lock nut 74 serves for blocking the coupling between the tang 70 and the bush 72.

In the condition of figure 4, the welding pressure is transmitted from the electrode 22 to the load cell 68 through the electrode-holder 66, the bottom wall 62 of the cup-shaped body 60, the coil spring 64, the spacer bush 72 and the tang 70.

A welding cycle will be now described by referring in succession to figures 2, 3 and 4.

The welding cycle is preferably automatized, under the control of a programmer.

While the movable element 24 is in the raised and deflected position of figure 2, the workpieces of sheet W to be welded are positioned on the platform 18, as well as on the platform 20 of figure 1.

Once the workpieces W are positioned, the actuator 46 is powered in the direction of the down travel of its rod 48, which drives the tracer unit 36 downwards with it.

In this down movement, the upper rollers 44 go down along the deflected portion 40 of the guide 34, the lower rollers 42 begin to go down along the lower linear portion 38 of the guide 34 and the movable element 24 straightens according to arrow F2 of figure 3, by rotating about the axis of the lower rollers 42.

Once the movable element 24 has reached the intemediate raised and straightened position of figure 3, the further downward return of the rod 48 causes the element 24 to go down until it reaches the working position of figure 4, in which the electrode 22 presses the workpieces W perpendicularly to the welding plane P and to the workpieces themselves.

Preferably, an additional guide system is provided, which comprises a pair of opposite rollers 76, carried by the movable element 24 and only one of which can be seen in figures 1 to 4.

In the downward movement of the element 24 between the positions of figures 2 and 3, the rollers 76 cooperate with respective blocks 78 inserted on the two body sides 32 and which constitute guide tracks for the rollers 76, in order to counteract the reaction which would tend to cause the element 24 to rotate in the direction opposite to that of arrow F2 of figure 3.

While the electrode 22 is kept pressed on the workpieces W in the condition of figure 4, thanks to the force transmitted to it by the actuator 46, the transformer 12 receives a signal from an electronic control unit and applies the welding current impulses to the workpieces W through the electrode 22, so that the welding takes place.

Once the welding has been executed, the actuator 46 causes the movable element 24 to go up again towards the raised and withdrawn position of figure 2, the welded workpieces W are removed and the machine is ready for a new welding cycle.

With reference to the drawings, a machine has been described as a non-limitative example, in which the welding plane P of the workpieces W is horizontal and the direction in which the electrode 22 is applied on the workpieces W is vertical, but it will be understood that in a machine according to the invention these directions could be different from those illustrated.

## Claims

1. Resistance welding machine for sheets, of the type comprising a frame (10) supporting on the one side a workpiece-holder platform (18) on which two or more superimposed workpieces of sheet (W) to be welded together can be supported and positioned, and on the other side a columnar structure (30) arranged close to the platform (18) and on which an element (24) carrying a welding electrode (22) is mounted, which element is movable between a withdrawn position in which the electrode (22) is not superimposed to the workpieces (W) to be welded, and a working position, in which the electrode (22) is applied on the workpieces (W) perpendicularly to a welding plane (P), and in which control means are provided for causing the element (24) to move between the two aforesaid positions, pressure means for pressing the electrode (22) on the workpieces of sheet (W) and pressing together the workpieces themselves between the electrode (22) and the platform (18), a pressure electrode (26) for closing the electrical welding circuit, the pressure electrode (26) being on the same side of the workpieces (W) as the welding electrode (22) and cooperating through the workpieces (W) with the platform (20), and a transformer (12) the secondary of which is connected on the one side to the electrode (22) and on the other side to the pressure electrode (26) in order to allow a welding current to pass in the workpieces (W) when they are pressed against the platform (18), **characterized in that**
the columnar structure (30) is provided with a guide (34) acting as a fixed cam and having a lower linear portion (38) perpendicular to the welding plane (P) and an upper deflected portion (40), **in that**
the movable element (24) carrying the welding electrode (22) is provided with a slidable tracer unit (36) which is in engagement with the guide (34) and is adapted to assume a deflected position, in which the electrode (22) is not superimposed to the workpieces (W) to be welded, when the tracer unit (36) is in engagement with the deflected portion (40) of the guide, and an intermediate straightened position in which the electrode (22) is superimposed to the workpieces (W) to be welded and is directed perpendicularly towards the welding plane (P), when the tracer unit (36) is in engagement with the lower portion (38) of the guide, **in that**
the control means and the pressure means are jointly constituted by a linear to-and-fro actuator (46) having a rod (48) to which the tracer unit (36) is articulated in order to allow the element (24) to rotate between the two deflected and intermediate positions, **in that**
the actuator (46) is adapted to produce both the aforesaid rotation of the movable element (24) and the linear movement of the movable element (24) between the intermediate position and the lowered working positions, and **in that**
the pressure electrode (26) is carried by an oscillating arm (28), which can be raised to raised and withdrawn position in order to leave space above the platform (20) free.

2. Resistance welding machine according to claim 1, **characterized in that** the columnar structure (30) comprises a pair of opposite body sides (32) between which the movable element is arranged (24),
**in that** the guide has the shape of a pair of homologous slits (34) formed in the body sides (32) and the tracer unit (36) comprises, for each slit (34), a pair of superimposed tracer rollers (42, 44) engaged in the slit itself,
**in that** the movable element (24) is articulated about the axis of the lower roller (42) of each pair of rollers,
and
**in that** the travel of the rod (48) of the actuator (46) has a length such that, when the movable element (24) is at the deflected position, the lower roller (42) of each pair of rollers is at the top of the lower portion (38) of the respective slit (34) and the upper roller (44) of each pair of rollers is at the deflected portion (40) of the respective slit (34).

3. Resistance welding machine according to claim 1 or 2, **characterized in that** the movable element (24) comprises a r-shaped body (50) with an upright (52) carrying the tracer unit (36) and an upper bracket (54) carrying the electrode (22) with the interposition of damping elastic means (64) which are yieldable in the direction of application of the pressure of the electrode (22) on the workpieces of sheet (W).

4. Resistance welding machine according to claim 3, **characterized in that** a load cell (68) acting as a pressure transducer for generating an electrical signal of authorisation for the welding when the welding pressure reaches a preset value, is associated to the elastic means (64).

5. Resistance welding machine according to claim 3, **characterized in that** the upper bracket (54) of the movable element (24) carries a hollow body (56) fastened to it, acting as a cylinder, which is closed at the top by a head (58),
**in that** a cup-shaped body (60) acting as a piston and having a bottom wall (62) to which the electrode is fixed, is slidably mounted in the hollow body (56), and
**in that** the elastic means are constituted by a compression coil spring (64) contained in the cup-shaped body (60) and counteracting on the one side against the aforesaid bottom wall (62) and on the other side against the aforesaid head (58).

6. Resistance welding machine according to claim 5, **characterized in that** it comprises a load cell (68) interposed between the spring (64) and the head (58), which acts as a pressure transducer in order to generate an authorisation electrical signal for the welding when the welding pressure reaches a preset value.

## Patentansprüche

1. Widerstandsschweißmaschine für Bleche, umfassend ein Gestell (10), das an einer Seite einen Werkstück-Aufnahmetisch (18) trägt, auf dem zwei oder mehr übereinander liegende und miteinander zu verschweißende Werkstücke (W) aus Blech abgestützt und positioniert werden können, und das an der anderen Seite eine Säulenstruktur (30) trägt, die neben dem Aufnahmetisch (18) angeordnet und auf der ein Organ (24) angebracht ist, das eine Schweißelektrode (22) aufnimmt und das aus einer zurückgezogenen Stellung, in der sich die Elektrode (22) nicht über den zu verschweißenden Werkstücken (W) befindet, in eine Arbeitsstellung beweglich ist, in der die Elektrode (22) rechtwinklig zu einer Schweißebene (P) an den Werkstücken (W) anliegt, wobei Steuermittel für die Bewegung des Organs (24) zwischen den beiden Stellungen, Mittel zum Andrücken der Elektrode (22) an die Werkstücke (W) aus Blech und zum Zusammendrücken der Werkstücke (W) zwischen der Elektrode (22) und dem Aufnahmetisch (18), eine Druckelektrode (26) zum Schließen des Schweißstromkreises, die auf derselben Seite der Werkstücke (W) wie die Schweißelektrode (22) liegt und über die Werkstücke (W) mit dem Aufnahmetisch (20) zusammenwirkt, sowie ein Transformator (12) vorgesehen sind, dessen Sekundärwicklung einerseits mit der Schweißelektrode (22) und andererseits mit Druckelektrode (26) verbunden ist, damit ein Schweißstrom in die Werkstücke (W) fließt, wenn diese gegen den Aufnahmetisch (20) gedrückt sind, **dadurch gekennzeichnet,**
**dass** die Säulenstruktur (30) eine Führung (34) hat, die als feste Nockenbahn wirkt und einen unteren, geraden und zur Schweißebene (P) rechtwinkligen Abschnitt (38) sowie einen oberen, abgewinkelten Abschnitt (40) hat,
**dass** das bewegliche und die Schweißelektrode (22) tragende Organ (24) mit einer verschiebbaren Tasteinheit (36) ausgerüstet ist, die mit der Führung (34) in Eingriff ist und eine abgelenkte Position, in der die Schweißelektrode (22) nicht über den zu verschweißenden Werkstücken (W) liegt, wenn sich die Tasteinheit (36) in Eingriff mit dem abgewinkelten Abschnitt (40) der Führung (34) befindet, und eine gerade Zwischenposition einnehmen kann, in der sich die Schweißelektrode (22) über den miteinander zu verschweißenden Werkstücken (W) befindet und senkrecht zu der Schweißebene (P) ausgerichtet ist, wenn die Tasteinheit (36) in Eingriff mit dem unteren Abschnitt (38) der Führung (34) ist,
**dass** die Steuermittel und die Andruckmittel gemeinsam aus einem linear hin- und hergehenden Stellantrieb (46) mit einer Stange (48) bestehen, an der die Tasteinheit (36) zur Herbeiführung einer Drehung des Organs (24) zwischen der abgelenkten Position und der geraden Zwischenposition angelenkt ist,
**dass** der Stellantrieb (46) so ausgebildet ist, dass er sowohl die Drehung als auch die Linearbewegung des beweglichen Organs (24) zwischen der Zwischenstellung und der abgesenkten Arbeitsstellung erzeugt,
und **dass** die Druckelektrode (26) an einem Schwenkarm (28) angebracht ist, der in eine angehobene Rückzugsstellung schwenkbar ist, um über dem Aufnahmetisch (18) einen Zwischenraum freizulassen.

2. Widerstandsschweißmaschine nach Anspruch 1, **dadurch gekennzeichnet, dass** die Säulenstruktur (30) ein Paar gegenüberliegender Seitenwangen (32) hat, zwischen denen das bewegliche Organ (24) angeordnet ist,
dass die Führung die Form von zwei homologen Schlitzen (34) hat, die in die Seitenwangen (32) eingearbeitet sind, und die Tasteinheit (36) in jedem Schlitz (34) ein Paar übereinanderliegender Tastrollen (42, 44) hat, die in den jeweiligen Schlitz (34) eingreifen,
dass das bewegliche Organ (24) um die Achse der unteren Tastrolle (42) jedes Rollenpaares schwenkbar ist,
und dass der Hub der Stange (48) des Stellantriebs (46) eine solche Länge hat, dass sich die untere Rolle (42) jedes Rollenpaares am oberen Scheitelpunkt des unteren Abschnitts (38) des entsprechenden Schlitzes (34) und die obere Rolle (44) jedes Rollenpaares im abgewinkelten Abschnitt (40) des entsprechenden Schlitzes (34) befindet, wenn sich das bewegliche Organ (24) in der abgelenkten Position befindet.

3. Widerstandsschweißmaschine nach Anspruch 1 oder 2, **dadurch gekennzeichnet, dass** das bewegliche Organ (24) aus einem T-förmigen Körper (50) mit einem die Tasteinheit (36) tragenden Pfosten (52) und einer oberen Konsole (54) besteht, die unter Zwischenschaltung von elastischen Dämpfungsmitteln (64), die in Druckrichtung der Elektrode (22) gegen die Bleckwerkstücke (W) nachgiebig sind, die Schweißelektrode (22) trägt.

4. Widerstandsschweißmaschine nach Anspruch 3, **dadurch gekennzeichnet, dass** den elastischen Dämpfungsmitteln (64) eine Kraftmessdose (68) zugeordnet ist, die als Druckübertragungsglied dient, um ein elektrisches Signal zum Einleiten des Schweißvorgangs zu erzeugen, wenn der Schweißdruck einen vorbestimmten Wert erreicht.

5. Widerstandsschweißmaschine nach Anspruch 3, **dadurch gekennzeichnet, dass** die obere Konsole (54) des beweglichen Organs (24) einstückig mit einem Hohlkörper (56) ausgebildet ist, der als Zylinder wirkt, welcher oben durch einen Kopf (58) abgeschlossen ist,
dass in dem Hohlkörper (56) ein topfförmiger Körper (60) verschiebbar gelagert ist, der als Kolben wirkt und eine Bodenwand (62) hat, an der die Schweißelektrode (22) befestigt ist,
und dass die elastischen Dämpfungsmittel aus einer Schraubendruckfeder (64) bestehen, die in dem topfförmigen Körper (60) angeordnet ist und sich auf einer Seite an der Bodenwand (62) und auf der anderen Seite an dem Kopf (58) abstützt.

6. Widerstandsschweißmaschine nach Anspruch 5, **dadurch gekennzeichnet, dass** eine Kraftmessdose (68) zwischen die Feder (64) und den Kopf (58) eingesetzt ist und als Druckübertragungsglied dient, um ein elektrisches Signal zum Einleiten des Schweißvorgangs zu erzeugen, wenn der Schweißdruck einen vorbestimmten Wert erreicht.

## Revendications

1. Machine de soudage par résistance pour des tôles, du type comprenant un châssis (10) supportant sur un premier côté, une plate-forme porte-pièce (18) sur laquelle peuvent être maintenues et positionnées deux, ou plus de deux, pièces en tôle (W) superposées à souder l'une à l'autre, et, sur l'autre côté, une structure colonnaire (30) disposée à proximité de la plate-forme (18) et sur laquelle est monté un élément (24) portant une électrode de soudage (22), lequel élément est mobile entre une position rétractée, dans laquelle l'électrode (22) ne se superpose pas aux pièces (W) à souder, et une position de travail, dans laquelle l'électrode (22) est appliquée sur les pièces (W) perpendiculairement à un plan de soudage (P) et dans laquelle des moyens de commande sont prévus pour amener l'élément (24) à se déplacer entre les deux positions précitées, des moyens de pression étant prévus pour presser l'électrode (22) sur les pièces en tôle (W) et pour appuyer sur les pièces l'une contre l'autre entre l'électrode (22) et la plate-forme (18), une électrode de pression (26) étant prévue pour fermer le circuit électrique de soudage, l'électrode de pression (26) étant située sur le même côté des pièces (W) que l'électrode de soudage (22) et coopérant, au travers des pièces (W), avec la plate-forme (20), et un transformateur (12) dont le secondaire est connecté d'un côté à l'électrode (22) et de l'autre côté à l'électrode de pression (26) afin de permettre à un courant de soudage de passer dans les pièces (W) lorsqu'elles sont pressées contre la plate-forme (18), **caractérisé en ce que**
la structure colonnaire (30) est équipée d'un guide (34) agissant comme une came fixe et ayant une partie linéaire (38) inférieure perpendiculaire au plan de soudage (P) et une partie supérieure (40) infléchie, **en ce que** l'élément mobile (24) portant l'électrode de soudage (22) est pourvu d'une unité suiveuse coulissante (36) qui est en engagement dans le guide (34) et est adaptée à adopter une position infléchie, dans laquelle l'électrode (22) n'est pas superposée aux pièces (W) à souder, lorsque l'unité suiveuse (36) est engagée dans la partie infléchie (40) du guide, et une position intermédiaire redressée dans laquelle l'électrode (22) est superposée aux pièces (W) à souder et est dirigée perpendiculairement au plan de soudage (P), lorsque l'unité suiveuse (36) est engagée dans la partie inférieure (38) du guide, **en ce que**
les moyens de commande et les moyens de pression sont l'un et l'autre constitués par un actionneur (46) à va-et-vient linéaire, comportant une tige (48) à laquelle l'unité suiveuse (36) est articulée de manière à permettre à l'élément (24) de tourner entre les deux positions déviée et intermédiaire, **en ce que**
l'actionneur (46) est adapté pour produire à la fois la rotation précitée de l'élément mobile (24) et le mouvement linéaire de l'élément mobile (24) entre la position intermédiaire et la position basse de travail, et **en ce que**
l'électrode de pression (26) est portée par un bras oscillant (28), qui peut être levé vers une position levée et retirée, afin de laisser libre l'espace situé au-dessus de la plate-forme (20).

2. Machine de soudage par résistance selon la revendication 1, **caractérisée en ce que** la structure colonnaire (30) comprend
une paire de parties latérales en regard (32) entre lesquelles l'élément mobile (24) est disposé,
**en ce que** le guide a la forme d'une paire de fentes homologues (34) aménagées dans les parties latérales (32) en regard et l'unité suiveuse (36) comprend, pour chaque fente (34), une paire de rouleaux suiveurs superposés (42, 44) engagés dans les fentes elles-mêmes,
**en ce que** l'élément mobile (24) est articulé autour de l'axe du rouleau inférieur (42) de chaque paire de rouleaux, et
**en ce que** le déplacement de la tige (48) de l'actionneur (46) a une longueur telle que, lorsque l'élément mobile (24) est en la position infléchie, le rouleau inférieur (42) de chaque paire de rouleaux est en haut de la partie inférieure (38) de la fente (34) respective et le rouleau supérieur (44) de chaque paire de rouleaux est dans la partie infléchie (40) de la fente (34) respective.

3. Machine de soudage par résistance selon la revendication 1 ou la revendication 2, **caractérisée en ce que** l'élément mobile (24) comprend un corps (50) en forme de Γ avec un montant (52) portant l'unité suiveuse (36) et une branche supérieure (54) portant l'électrode (22) avec interposition de moyens élastiques d'amortissement (64) qui sont susceptibles de déformation dans le sens de l'application de la pression de l'électrode (22) sur les pièces (W) en tôle.

4. Machine de soudage par résistance selon la revendication 3, **caractérisée en ce qu'**une cellule de charge (68), agissant comme un capteur de pression pour générer un signal électrique d'autorisation de la soudure lorsque la pression de soudage atteint une valeur prédéterminée, est associée aux moyens élastiques (64).

5. Machine de soudage par résistance selon la revendication 3, **caractérisée en ce que** la branche supérieure (54) de l'élément mobile (24) comporte un corps creux (56) fixé à elle, agissant comme un cylindre, qui est fermé au sommet par une tête (58),
**en ce qu'**un corps en forme de coupelle (60), agissant comme un piston et présentant une paroi de fond (62) à laquelle l'électrode est fixée, est monté coulissant dans le corps creux (56), et
**en ce que** les moyens élastiques sont constitués par un ressort hélicoïdal de compression (64) contenu dans le corps en forme de coupelle (60) et portant, d'un côté, contre la paroi de fond précitée (62), et, de l'autre côté, contre la tête (58) précitée.

6. Machine de soudage par résistance selon la revendication 5, **caractérisée en ce qu'**elle comprend une cellule de charge (68) interposée entre le ressort (64) et la tête (58), qui agit comme un capteur de pression afin de produire un signal électrique d'autorisation pour le soudage lorsque la pression de soudage atteint une valeur prédéterminée.
